# EUROPEAN PATENT SPECIFICATION

(11) **EP 3 822 073 B1**
(45) Date of publication and mention of the grant of the patent: **26.01.2022**
(21) Application number: 19383001.5
(22) Date of filing: 14.11.2019
(51) Int. Cl.: B32B 3/12, B32B 7/12, B32B 15/08, B32B 27/08, B32B 27/28, B32B 27/30, B32B 27/36

(54) **FIREPROOF AND THERMAL INSULATOR PRODUCT**
FEUERFESTES UND WÄRMEISOLIERENDES PRODUKT
PRODUIT ISOLANT RÉSISTANT AU FEU ET THERMIQUE

(43) Date of publication of application: 19.05.2021
(73) Proprietor: Airbus Operations, S.L., 28906 Getafe (ES)
(72) Inventor: ARANA HIDALGO, Alberto, 28906 Getafe (ES); BALLESTERO MENDEZ, Jorge, 28906 Getafe (ES); BUTRAGUEÑO MARTINEZ, Asuncion, 28905 Getafe (ES); KEMPF, Manuel, 86609 Donauwörth (DE); HERNAIZ LOPEZ, Guillermo, 28906 Getafe (ES); VAZQUEZ DE CASTRO, Jesus Javier, 28906 Getafe (ES); INIESTA LOZANO, Fernando, 28906 Getafe (ES); GUERRERO MARTIN, Javier, 28906 Getafe (ES)

(56) References cited:
- WO-A1-2009/040864
- US-A1- 2005 224 637
- US-A1- 2017 205 117

## Description

### Field of the invention

This invention refers to a product that provides structures and associated systems with protection against the consequences of a fire event, particularly flame penetration, and that also provides thermal insulation capability. The invention is particularly applicable in different parts of aircrafts and helicopters.

### Background of the invention

Many parts of the aircraft are submitted to fire events, and in order to ensure the normal operation of the aircraft, the structure and associated systems have to be protected against the fire event consequences.

For these purposes, several materials and solutions have been tested and installed to prevent the consequences of the fire events. Two main effects need to be solved depending on the application: flame penetration and thermal insulation.

The flame penetration issue needs to be addressed keeping the fire enclosed in the designated area. On the other hand, the thermal insulation capability may allow the use of a wide range of materials for the structural applications having less decoupling temperature requirements.

The most widely used state of the art solution are the thermal blankets, mainly made of ceramic or silicone laminates with aluminum sheet. They are an effective solution for flame penetration and thermal insulation, but are also expensive and heavy.

Thermal blanket insulations may present some issues to be introduced in structural applications due to its lack of rigidity. Due to this, they could collapse during the manufacturing or assembly process, leading to a loss of their effectiveness.

Another state of the art solution is based on materials which work against a fire event by creating a porous charred layer of material, preventing the flame penetration and providing insulation. This option is relevant in many applications due to its performance, however structures submitted to vibrations cannot implement this solution due to the loss of protection

under the operation conditions. The patent WO2009/040864 discloses a fireproof and thermal insulator panel, which comprises a honey-comb core infilled with powder of oxide-based materials with low thermal conductivity.

In a further state of the art solution, materials like titanium, steel or Inconel that exhibit higher fire-resistant/fire-proof capability are added or used instead of conventional materials usually used for structural parts such as aluminium, composite (CFRP, GFRP, etc.) in order to overcome the fire penetration issue. As example of this can be appreciated in the APU of an aircraft, which can be surrounded by a titanium firewall to prevent the aluminum (acting as structural material) to be damaged, and letting the fire come out of the tail cone in a fire event.

### Summary of the invention

The object of the present invention is to provide a product that is fireproof and has also good thermal insulation capability, which allows to avoid high temperatures at the structure around the fire source that could damage said structure.

The invention provides a fireproof and thermal insulator product that comprises a honey-comb core infilled with Alkaline Earth Silicate (AES) material.

The product works as a fire-proof and thermal insulation arrangement that can be served for structural and non-structural applications.

The invention provides the following advantages:
- Lower cost than the state of the art solutions.
- Low density material used in the infilled honey-comb core, allowing weight reduction and lighter solutions than state of the art.
- Fire-proof and thermal insulation capabilities ensured by test.
- Environmentally friendly.
- Integration in structural panels with potential cost reduction, while avoiding the issue of collapsing the insulation material during the manufacturing and/or assembly process.
- Enable the use of structural materials in fire-zone designated areas with limited high-temperature strength capability, thanks to the decoupling of thermal and structural requirements.

Other characteristics and advantages of the present invention will be clear from the following detailed description of several embodiments illustrative of its object in relation to the attached figures.

### Brief description of drawings

Figure 1 shows a schematic view of a fireproof and thermal insulator product, according to a first preferred embodiment of the invention.
Figure 2 shows a schematic view of a fireproof and thermal insulator product, according to a second preferred embodiment of the invention.
Figure 3 shows a schematic view of a fireproof and thermal insulator product, according to a third preferred embodiment of the invention.
Figure 4 shows a schematic view of a fireproof and thermal insulator product, according to a fourth preferred embodiment of the invention.
Figure 5a shows an aircraft having an APU compartment on its rear end, in which at least one firewall includes the fireproof and thermal insulator product of the invention. Figure 5b shows a detailed view of the APU compartment.
Figures 6a and 6b respectively shows a front firewall of an APU compartment.
Figure 7 shows an engine deck for a helicopter comprising the fireproof and thermal insulator product of the invention.
Figure 8 shows a helicopter engine compartment having a central wall comprising the fireproof and thermal insulator product of the invention.

### Detailed description of the invention

The invention consists on a fireproof and thermal insulator product that avoids to reach high temperatures in the structural components around the fire source that could lead to its degradation. The product may serve for structural and non-structural applications.

It is important to take into account that the "fireproof" concept is defined by aeronautical regulations such as:
- FAR/JAR 25.1191: Firewalls-Definition.
- FAR/JAR 25.865: Fire Protection Of Flight Controls, Engine Mounts And Other Flight Structures.

According to the invention, the product comprises a honey-comb core infilled with Alkaline Earth Silicate (AES) material. The material of the honey-comb core can be metallic or polymeric.

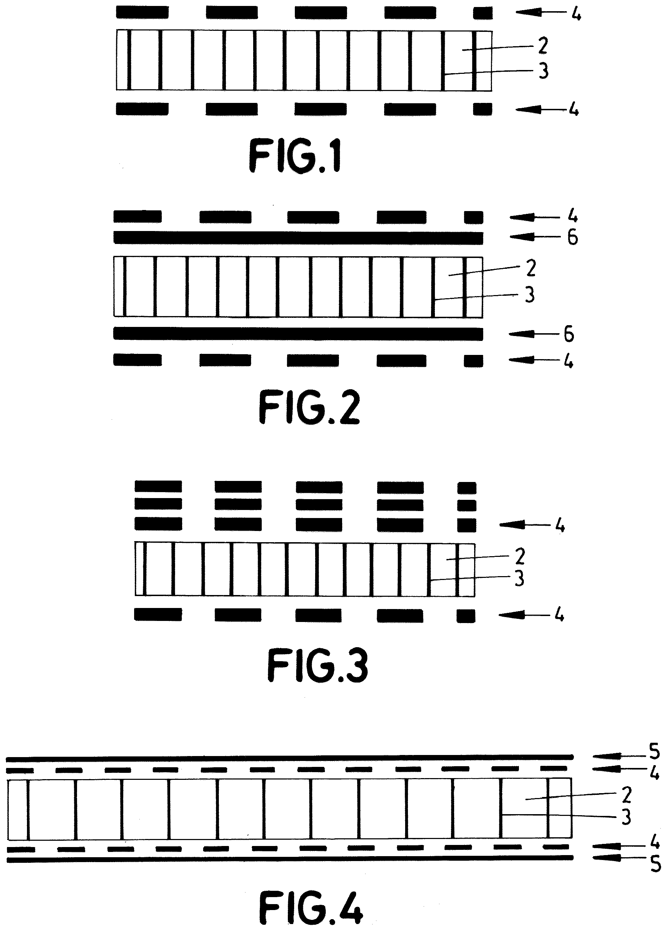

Figure 1 shows a first preferred embodiment of the fireproof and thermal insulator product 1 of the invention that comprises a stack of layers including a honey-comb core 3 infilled with AES 2 surrounded by a pair of layers of FRP 4. Preferably, the layer of FRP 4 is a GFRP (Glass Fibre Reinforcement Plastic) layer.

Figure 2 shows a second preferred embodiment of the fireproof and thermal insulator product 1 that additionally comprises an adhesive layer 6 deposited between the honey-comb core 3 infilled with AES 2 and the FRP layer 4.

The product may serve for structural and non-structural applications.

Figure 3 shows a third preferred embodiment of the fireproof and thermal insulator product 1 that can be used for structural applications, that comprises a stack of layers including the honey-comb core 3 infilled with AES 2 surrounded by layers of FRP 4, at least one layer of FRP 4 at the bottom, and several layers on the top of the product 1.

In case of need, the infilled honey-comb core 3 may be protected against aggressive fluids, by covering the infilled core 3 with a liquid barrier film 5. This barrier may preferably be a thermoplastic film, such as a PVF (Poly-Vinyl Fluoride) film, a PEEK film, a PDVF film, or a PET film. Figure 4 shows an embodiment of this case, preferably used for non-structural applications.

As the product of the invention is more rigid than the state of the art solution with thermal blankets, it overcomes the limitation of their structural integration in composite parts. For example, the collapse of the insulator material during the curing in the autoclave due to the high pressure exerted.

The new solution consisting on infilled honey-comb cores with AES have been tested fulfilling the FAR/JAR 25 regulations regarding firewalls, FAR/JAR25.1191 & FAR/JAR25.865, that is:
- Direct flame impingement for 15min.
- Calibrated Flame of 1100ºC at a distance of 100mm from the specimen.
- Calibrated Heat Flux.
- Specimen under vibration of 50 Hz (reduced to 16.6 Hz after 5 min.).
- No load applied.
- Protection against fluids of GFRP and PVF covering the infilled core.

According to another aspect, the invention also refers to a composite part that comprises the fireproof and thermal insulator product of the invention.

The product may be attached to the part by means of fasteners, and preferably by washers mounted creating an air chamber between the part and the product. Alternatively, the product is bonded to the part by means of an adhesive film, a paste adhesive or a click-bond. And alternatively, the product is integrated into the part by means of co-curing, co-bonding, or secondary-bonding.

Hereafter a list of potential embodiments of the proposed invention:

### • Firewall of the rear end of an aircraft:

- Sizing constraint: Fire-proof and Thermal protection
- Modification: Replace current Titanium firewall by a new protection based in the proposed solution. Honeycomb core could be bent to be adapted for the corners and curved panels.
- Benefits: Safety improvement, RC reduction, in case of fire, neither flame nor heat will affect the structure of the rear end of the aircraft, so there will be no need to replace it after fire event.

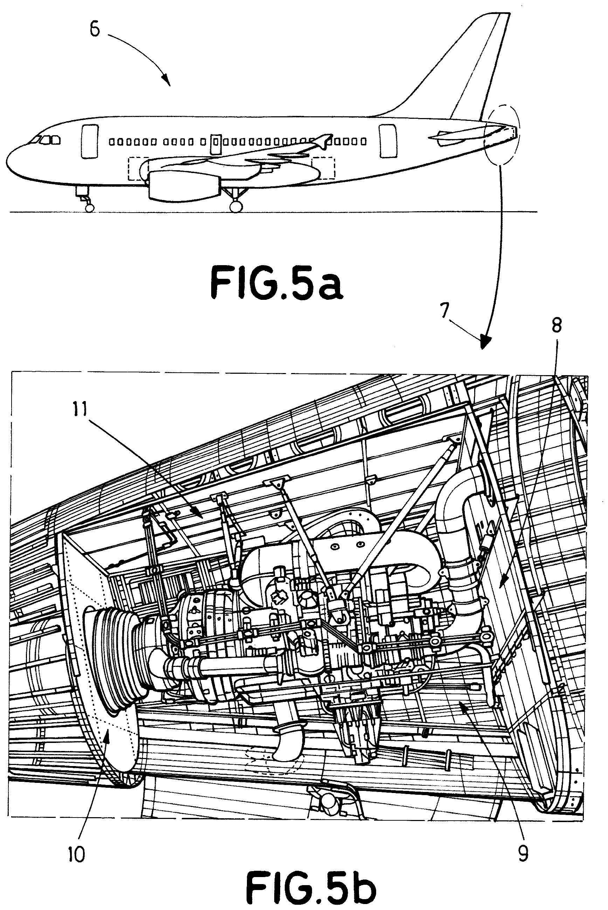

According to another aspect, the invention also refers to a rear end of an aircraft 6, comprising an APU compartment 7 insulated by at least one firewall 8, 9, 10, 11 that comprises the fireproof and thermal insulator product 1. Figure 5a shows an aircraft 6 having an APU compartment 7 on its rear end. Figure 5b shows a detailed view of the APU compartment 7 and most of its walls: the front firewall 8, the lateral firewall 9, the rear firewall 10, and the upper firewall 11, in where at least one of its walls includes the fireproof and thermal insulator product 1.

### • Front firewall of the rear end of an aircraft:

- Sizing constraint: Fire-proof and Thermal protection
- Modification: Replace current Titanium firewall and aluminium stringers by a new protection based in the proposed solutions.
- Benefits: Safety improvement, RC reduction, in case of fire, neither flame nor heat will affect the structure of the firewall, so there will be no need to replace it after fire event.

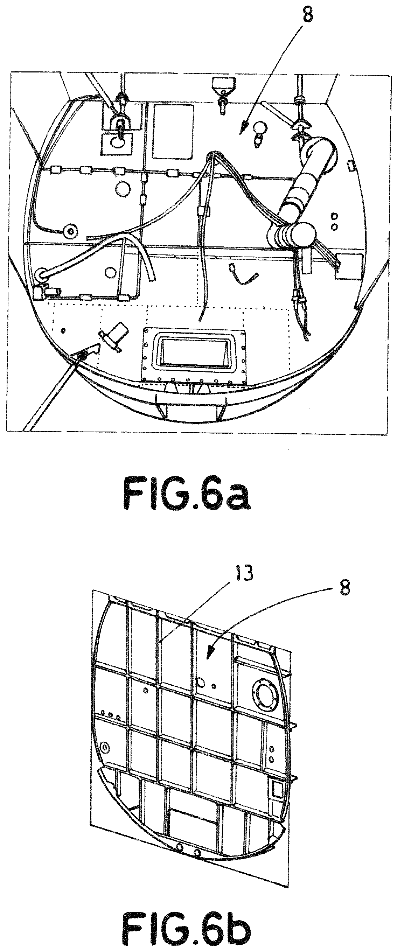

According to another aspect, the invention also refers to a front firewall 8 that comprises the fireproof and thermal insulator product 1. Figures 6a and 6b show a front firewall 8 of an APU compartment. Figure 6b shows the stringers 13 that can be replaced by the proposed invention.

### • Composite fireproof duct:

- Sizing constraint: Thermal protection
- Modification: Replace current titanium, steel or inconel ducts by composite ones based in the proposed solution.
- Benefits: Safety improvement, RC reduction.

According to another aspect, the invention also refers to a duct comprising the fireproof and thermal insulator product 1.

### • Helicopter engine deck:

- Sizing constraint: primary structure, thermal protection
- Modification: Replace current Titanium skin and stringers by a composite sandwich with integrated fire & thermal protection.
- Benefits: Weight saving by enabling a CFRP composite engine deck design, no mismatch of thermal expansion coefficient between engine deck and CFRP composite airframe

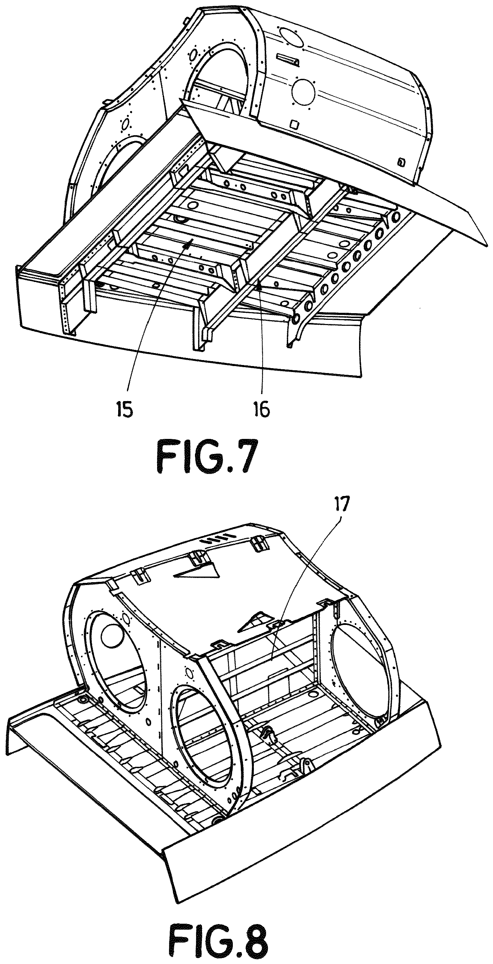

According to another aspect, the invention also refers to a helicopter engine deck 15 that comprises the fireproof and thermal insulator product 1. Figure 7 shows an engine deck 15 including a titanium skin, stringers, clips and gusstes, over a framework 16 usually made of aluminium.

### • Helicopter engine compartment central firewall:

- Sizing constraint: stiffened panel, Thermal protection
- Modification: Replace current stiffened Titanium skin by a composite sandwich with integrated fire & thermal protection.
- Benefits: less maintenance and repair, increased value for the customer

According to another aspect, the invention also refers to a helicopter having an engine compartment including a central firewall 17 that comprises the fireproof and thermal insulator product 1. Figure 8 shows a helicopter engine compartment having a central wall 17 comprising the fireproof and thermal insulator product 1.

Although the present invention has been fully described in connection with preferred embodiments, it is evident that modifications may be introduced within the scope thereof, not considering this as limited by these embodiments, but by the contents of the following claims.

## Claims

1. Fireproof and thermal insulator product (1), which comprises a honey-comb core (3) infilled with Alkaline Earth Silicate (AES) material (2).

2. Fireproof and thermal insulator product (1), according to claim 1, further comprising a FRP layer (4) staked onto the honey-comb core (3) infilled with AES material (2), the FRP layer (4) preferably being a GFRP (Glass Fibre Reinforcement Plastic) layer.

3. Fireproof and thermal insulator product (1), according to claim 2, further comprising an adhesive layer (6) deposited between the honey-comb core (3) infilled with AES (2) and the FRP layer (4).

4. Fireproof and thermal insulator product (1), according to claim 1, further comprising a liquid barrier film (5), preferably being a thermoplastic film, such as a PVF (Poly-Vinyl Fluoride) film, a PEEK film, a PDVF film, or a PET film.

5. Fireproof and thermal insulator product (1), according to claims 2 or 3 and claim 4, wherein the liquid barrier film (5) is deposited over the FRP layer (4), contacting said FRP layer (4) to protect the product (1) from fluids.

6. A composite part comprising the fireproof and thermal insulator product (1) according to any preceding claims, wherein the product (1) is attached to the part by means of fasteners, and preferably by washers mounted creating an air chamber between the part and the product (1).

7. A composite part comprising the fireproof and thermal insulator product (1) according to any of claims 1-5, wherein the product (1) is bonded to the part by means of an adhesive film, a paste adhesive or a click-bond.

8. A composite part comprising the fireproof and thermal insulator product (1) according to any of claims 1-5, wherein the product (1) is integrated into the part by means of co-curing, co-bonding, or secondary-bonding.

9. A rear end of an aircraft (6), comprising an APU compartment (7) insulated by at least one firewall (8, 9, 10, 11) that comprises the fireproof and thermal insulator product (1) according to any of claims 1-5.

10. A rear end of an aircraft (6), comprising an APU compartment (7) having at least one front firewall (8) that comprises the fireproof and thermal insulator product (1) according to any of claims 1-5.

11. A duct comprising the fireproof and thermal insulator product (1) according to any of claims 1-5.

12. An helicopter having an engine deck (15) that comprises the fireproof and thermal insulator product (1) according to any of claims 1-5.

13. An helicopter having an engine compartment including a central firewall (17) that comprises the fireproof and thermal insulator product (1) according to any of claims 1-5.

## Patentansprüche

1. Feuerfestes und wärmeisolierendes Produkt (1), das einen Wabenkern (3) umfasst, der mit Erdalkalisilikat- (AES)-Material (2) ausgefacht ist.

2. Feuerfestes und wärmeisolierendes Produkt (1) nach Anspruch 1, des Weiteren umfassend eine FRP-Schicht (4), die auf den Wabenkern (3) gestapelt ist, der mit AES-Material (2) ausgefacht ist, wobei die FRP-Schicht (4) vorzugsweise eine GFRP (glasfaserverstärkter Kunststoff)-Schicht aufweist.

3. Feuerfestes und wärmeisolierendes Produkt (1) nach Anspruch 2, des Weiteren umfassend eine Klebeschicht (6), die zwischen dem Wabenkern (3), der mit AES (2) ausgefacht ist, und der FRP-Schicht (4) abgesetzt ist.

4. Feuerfestes und wärmeisolierendes Produkt (1) nach Anspruch 1, des Weiteren umfassend einen Flüssigkeitsbarrierefilm (5), der vorzugsweise ein thermoplastischer Film ist, wie ein PVF- (Polyvinylfluorid)-Film, ein PEEK-Film, ein PDVF-Film oder ein PET-Film.

5. Feuerfestes und wärmeisolierendes Produkt (1) nach den Ansprüchen 2 oder 3 und Anspruch 4, wobei der Flüssigkeitsbarrierefilm (5) über der FRP-Schicht (4) abgesetzt ist und die FRP-Schicht (4) kontaktiert, um das Produkt (1) vor Fluiden zu schützen.

6. Verbundteil, umfassend das feuerfeste und wärmeisolierende Produkt (1) nach einem der vorhergehenden Ansprüche, wobei das Produkt (1) mittels Befestigern an dem Teil angebracht ist, und vorzugsweise durch Unterlegscheiben montiert ist, wodurch eine Luftkammer zwischen dem Teil und dem Produkt (1) erzeugt wird.

7. Verbundteil, umfassend das feuerfeste und wärmeisolierende Produkt (1) nach einem der Ansprüche 1 bis 5, wobei das Produkt (1) mittels eines Klebefilms, eines pastösen Klebstoffs oder einer Klickverbindung an das Teil gebondet ist.

8. Verbundteil, umfassend das feuerfeste und wärmeisolierende Produkt (1) nach einem der Ansprüche 1 bis 5, wobei das Produkt (1) mittels gemeinsamem Härten, gemeinsamem Bonden oder sekundärem Bonden in das Teil integriert ist.

9. Heck eines Flugzeugs (6), umfassend ein APU-Fach (7), das durch mindestens eine Feuerwand (8, 9, 10, 11) isoliert ist, die das feuerfeste und wärmeisolierende Produkt (1) gemäß einem der Ansprüche 1 bis 5 umfasst.

10. Heck eines Flugzeugs (6), umfassend ein APU-Fach (7) mit mindestens einer vorderen Feuerwand (8), die das feuerfeste und wärmeisolierende Produkt (1) gemäß einem der Ansprüche 1 bis 5 umfasst.

11. Schacht, umfassend das feuerfeste und wärmeisolierende Produkt (1) gemäß einem der Ansprüche 1 bis 5.

12. Hubschrauber mit einer Motorabdeckung (15), die das feuerfeste und wärmeisolierende Produkt (1) gemäß einem der Ansprüche 1 bis 5 umfasst.

13. Hubschrauber mit einem Motorraum, der eine zentrale Feuerwand (17) einschließt, die das feuerfeste und wärmeisolierende Produkt (1) gemäß einem der Ansprüche 1 bis 5 umfasst.

## Revendications

1. Produit d'isolation ignifuge et thermique (1), qui comprend un noyau en nid d'abeilles (3) comblé avec un matériau (2) de type silicate alcalino-terreux (AES).

2. Produit d'isolation ignifuge et thermique (1), selon la revendication 1, comprenant en outre une couche de FRP (4) jalonnée sur le noyau en nid d'abeilles (3) comblé avec un matériau (2) de type AES, la couche de FRP (4) étant préférablement une couche de GFRP (plastique à renforcement de fibres de verre).

3. Produit d'isolation ignifuge et thermique (1), selon la revendication 2, comprenant en outre une couche d'adhésif (6) déposée entre le noyau en nid d'abeilles (3) comblé avec un matériau (2) de type AES et la couche de FRP (4).

4. Produit d'isolation ignifuge et thermique (1), selon la revendication 1, comprenant en outre un film barrière liquide (5), préférablement un film thermoplastique, tel qu'un film de PVF (poly(fluorure de vinyle)), un film de PEEK, un film de PDVF ou un film de PET.

5. Produit d'isolation ignifuge et thermique (1), selon la revendication 2 ou 3 et la revendication 4, le film barrière liquide (5) étant déposé sur la couche de FRP (4), en contact avec ladite couche de FRP (4) pour protéger le produit (1) contre des fluides.

6. Pièce composite comprenant le produit d'isolation ignifuge et thermique (1) selon l'une quelconque des revendications précédentes, le produit (1) étant fixé à la pièce au moyen d'éléments de fixation, et préférablement par des rondelles montées créant un compartiment d'air entre la pièce et le produit (1).

7. Pièce composite comprenant le produit d'isolation ignifuge et thermique (1) selon l'une quelconque des revendications 1 à 5, le produit (1) étant lié à la pièce au moyen d'un film d'adhésif, d'un adhésif en pâte ou d'un click-bond.

8. Pièce composite comprenant le produit d'isolation ignifuge et thermique (1) selon l'une quelconque des revendications 1 à 5, le produit (1) étant intégré dans la pièce au moyen d'un co-durcissement, d'une co-liaison ou d'une liaison secondaire.

9. Extrémité arrière d'un aéronef (6), comprenant un compartiment APU (7) isolé par au moins un pare-feu (8, 9, 10, 11) qui comprend le produit d'isolation ignifuge et thermique (1) selon l'une quelconque des revendications 1 à 5.

10. Extrémité arrière d'un aéronef (6), comprenant un compartiment APU (7) possédant au moins un pare-feu avant (8) qui comprend le produit d'isolation ignifuge et thermique (1) selon l'une quelconque des revendications 1 à 5.

11. Conduit comprenant le produit d'isolation ignifuge et thermique (1) selon l'une quelconque des revendications 1 à 5.

12. Hélicoptère possédant un pont de moteur (15) qui comprend le produit d'isolation ignifuge et thermique (1) selon l'une quelconque des revendications 1 à 5.

13. Hélicoptère possédant un compartiment moteur comportant un pare-feu central (17) qui comprend le produit d'isolation ignifuge et thermique (1) selon l'une quelconque des revendications 1 à 5.
